(19)

Europäisches
Patentamt
European
Patent Office
Office européen
des brevets

(11) **EP 2 767 555 A1**

(12) **EUROPEAN PATENT APPLICATION**

(43) Date of publication:
**20.08.2014 Bulletin 2014/34**

(51) Int Cl.:
**C08G 69/26** (2006.01)        **C08L 77/06** (2006.01)
**C08K 3/00** (2006.01)

(21) Application number: **13155491.7**

(22) Date of filing: **15.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Solvay Specialty Polymers USA, LLC.
Alpharetta, GA 30005-3914 (US)**

(72) Inventors:
 • **Norfolk, Linda M.
  CUMMING, GA Georgia 30041 (US)**
 • **Verfaillie, Geert J.
  9661 PARIKE (BE)**
 • **Shingte, Rahul
  390022 Gujarat Vadodara (IN)**

 • **Ghosh, Soumyadeb
  Gujarat - 39400 Bhavnagar (IN)**
 • **Majumder, Rajdeep
  700048 Kolkota (IN)**
 • **Shukla, Jignesh Markandray
  390018-GUJARAT VADODARA (IN)**
 • **Padmanaban, Gururajan
  390023-Gujarat Vadodara (IN)**
 • **Flores, Joel
  Alpharetta, GA Georgia 30004 (US)**
 • **Sriram, Suresh R.
  ALPHARETTA, GA Georgia 30022 (US)**

(74) Representative: **Benvenuti, Federica et al
SOLVAY SA
Intellectual Assets Management
Rue de Ransbeek, 310
1120 Bruxelles (BE)**

(54) **Mobile electronic devices made of amorphous polyamides**

(57)     The present invention relates to components of mobile electronic devices made of an amorphous polyamide composition characterized by excellent mechanical properties, low moisture uptake, low distortion and very good aesthetical properties. The amorphous polyamide has recurring units derived from the polycondensation of a mixture of monomers of aromatic dicarboxylic acid(s), cycloaliphatic diamine(s) with 6 to 12 carbon atoms, and a third monomer with 10 to 16 carbon atoms.

EP 2 767 555 A1

**Description**

**FIELD OF THE INVENTION**

The present invention relates to mobile electronic devices comprising at least one part made of a polyamide composition characterized by good mechanical properties, low moisture uptake, small distortion and very good aesthetical properties. These outstanding results are achieved by the presence of a specific amorphous polyamide very well suited for the manufacture of parts of mobile electronic components or devices such as mobile phone housings.

**BACKGROUND OF THE INVENTION**

Polyamides are well known and commonly used in various applications thanks to their exceptional behavior and outstanding mechanical properties. Polyamides are processed in all the ways used for thermoplastics, for use in applications in the electrical, electronic, medical and automotive industries.

Electronic devices, and in particular mobile electronic devices, such as mobile telephones, personal digital assistants, laptop computers, tablet computers, global positioning system receivers, portable games, radios, cameras and camera accessories, and the like are becoming increasingly widely used in many different environments. It is often important that the parts of such devices be made from materials that are easy to process into various end-use articles, are able to withstand the rigors of frequent use of such articles and can meet challenging aesthetic demands while not interfering with their intended operability. It is often desirable that such materials have good impact resistance, flame resistance, moisture resistance, tensile strength, stiffness and that they exhibit minimal warpage and low flash when they are formed (as by injection molding, for example) into the end use articles or parts of articles.

The warpage is a term designating dimensional distortion in the molded parts leading to their concave or convex curvature. An inherent shrinkage occurs during any injection molding process because the density of the polymer varies from the processing temperature to the ambient temperature. During injection molding, the variation in shrinkage creates internal stresses which lead to the warpage of the part upon ejection from the mold. If the shrinkage throughout the part is uniform, the molded part will not deform or warp, it will simply become smaller. However, achieving low and uniform shrinkage is a complicated task due to the presence and interaction of many factors such as molecular and fiber orientations, mold cooling, part and mold designs, and process conditions.

Flash formation in thermoplastics is another one of the major problems encountered during injection molding. Flash is referring to polymer that has flowed into the space between the split halves of the mold cavity and then solidified resulting in excess material exceeding the normal shape of the molded part.

Many prior art articles for electronic applications (and in particular for mobile electronic applications) were made in polycarbonate and more precisely in bisphenol A polycarbonate. This material offers good properties such as a low warpage and a low flash but suffers unfortunately from an unsatisfactory mechanical properties and in particular a low tensile modulus.

An improvement in the mechanical properties, such as strength and rigidity, can be achieved by the addition of fibrous reinforcing materials, e.g. glass fibers. However, an increased warpage of the molded parts is frequently associated with the addition of fibrous reinforcing materials. Also, in particular in the case of polycarbonate, glass filled compounds suffer from poor processability, low impact resistance and environmental stress cracking. Therefore, only small contents of fibrous reinforcing materials can be used and as a consequence, the molding compounds obtained have only poor mechanical properties in the molded parts.

Semi-crystalline polyamides are also used for the manufacture of mobile electronic devices where they bring the desired strength and flow properties while being still unsatisfactory for their high warpage, flash and high moisture uptake. Absorbed water acts generally as a plasticizer in polymer compositions reducing strength and stiffness at ambient temperatures.

In addition to the above mentioned requirements, colored articles have become a global trend in consumer products. Hence, mobile electronic components and devices need to be colored and/or painted to fulfill the consumer's desire.

Moreover, there is a growing need on the market to use bio-sourced monomers in the plastic industry to make green materials and thus reduce the carbon footprint of the existing materials.

There is accordingly a growing market interest for certain end use articles for mobile electronic applications that require - preferably a green material - featuring a low moisture uptake, high impact resistance, good strength, good stiffness, a low anisotropic warpage, a low flash on molding while being colorable and paintable in addition to being as thin and light as possible.

Many attempts have been made in the prior art to solve this complex problem.

EP 1972659A1 describes a polyamide resin composition having good strength and low warpage by virtue of being compounded with glass fibers having both elongated and circular cross-sections, which is suited for use as a material for portable electronic device parts. MXD6 and PA66 are used in the examples of EP'659A1 and show reduced warpage. Unfortunately, these compositions present other drawbacks such as a high moisture uptake.

US 2009/0062452 deals with reinforced polyamide molding compounds containing high-melting partially aromatic polyamides and glass fibers with a non circular cross-sectional area featuring an good combination of high stiffness and impact strength. US'452 discloses polyamides made from 50-100 mol % of at least one diamine selected from diamines comprising 6, 7, 8, 11 or 12 carbon atoms, MACM (3, 3'-dimethyl-4, 4'-diaminodicyclohexylmethane), PACM 4, 4'-diaminodicyclohexylmethane, BAC (1,3-bis(aminomethyl)cyclohexane) and MXDA (metaxylylene diamine) and optionally 0-50 mol % of another cycloaliphatic diamine comprising from 6 to 20 carbon atoms. US'452 also discloses a list of articles possibly made of said polyamides, among which appliances for telecommunication and entertainment electronics are mentioned.

US 2012/0083558 discloses certain halogen-free flame retardant compositions of semi-crystalline polyamides having a melting point from 240°C to 340°C composed of 25-100 mol % ofterephthalic acid, 0-75 mol % of other aromatic dicarboxylic acids, 25-100 mol % of aliphatic diamine comprising from 4 to 36 carbon atoms and 0-75 mol % of cycloaliphatic diamine comprising from 6 to 20 carbon atoms. Paragraph [0090] discloses specifically a polyamide made from at least 50 mol % of terephthalic acid and a mixture of BAC and diamine comprising 6 carbon atoms where the later diamine is present in an amount of at least 10 mol % based on total diamine content. This document also pertains to compounds comprising said polyamide, suitable for manufacturing electronic components such as components for portable electronic devices, housings for electronic components and mobile telephone housings.

Although semi-crystalline polymers appear to have very good mechanical properties, they present generally a great drawback during processing and molding of the parts made there from in that the molded parts present a high amount of flash buildups and exhibit warpage.

While the above mentioned references tried to solve part of the complex problem of finding a material of choice featuring all the above mentioned unique balance of properties at an affordable price, none of the solutions offered so far is satisfactory since the materials always present one or another drawback or property which is not at an acceptable level.

Thus, it is an objective of the present invention to provide a mobile electronic device comprising at least one part made of a material featuring excellent surface appearance, which material provides various advantages over prior art materials, in particular good processability, good flow, good thermal stability, low moisture uptake, excellent mechanical properties (and in particular good stiffness, tensile properties and impact resistance), no flash, low warpage, good paint adhesion and also excellent colorability.

## SUMMARY OF THE INVENTION

The present invention addresses the above detailed needs and relates to a mobile electronic device comprising at least one part comprising a polymer composition (C) comprising at least one amorphous polyamide (A) having recurring units derived from the polycondensation of a mixture of monomers comprising :

- at least one aromatic dicarboxylic acid;
- at least one cycloaliphatic diamine comprising from 6 to 12 carbon atoms, and
- at least one third monomer comprising from 10 to 16 carbon atoms selected from the group consisting of an acyclic aliphatic diamine, an acyclic aliphatic dicarboxylic acid and an acyclic aliphatic aminoacid

wherein the aromatic dicarboxylic acid is present in the mixture of monomers in an amount of from 70 to 100 mol %, based on the total amount of all dicarboxylic acids present.

The invention also pertains to a method for the manufacture of the above part of said mobile electronic device.

## DETAILED DESCRIPTION OF THE INVENTION

The term "mobile electronic device" is intended to denote an electronic device that is designed to be conveniently transported and used in various locations. Representative examples of mobile electronic devices include mobile phones, personal digital assistants, laptop computers, tablet computers, radios, cameras and camera accessories, watches, calculators, music players, global positioning system receivers, portable games, hard drives and other electronic storage devices, and the like.

The at least one part of the mobile electronic device according to the present invention may be selected from a large list of articles such as fitting parts, snap fit parts, mutually moveable parts, functional elements, operating elements, tracking elements, adjustment elements, carrier elements, frame elements, switches, connectors and housings, which can be notably produced by injection molding, extrusion or other shaping technologies.

In particular, the polymer composition (C) is very well suited for the production of housing parts of mobile electronic device.

Therefore, the at least one part of the mobile electronic device according to the present invention is advantageously a mobile electronic device housing. By "mobile electronic device housing" is meant one or more of the back cover, front cover, antenna housing, frame and/or backbone of a mobile electronic device. The housing may be a single article or comprise two or more components. By "backbone" is meant a structural component onto which other components of the device, such as electronics, microprocessors, screens, keyboards and keypads, antennas, battery sockets, and the like are mounted. The backbone may be an interior component that is not visible or only partially visible from the exterior of the mobile electronic device. The housing may provide protection for internal components of the device from impact and contamination and/or damage from environmental agents (such as liquids, dust, and the like). Housing components such as covers may also provide substantial or primary structural support for and protection against impact of certain components having exposure to the exterior of the device such as screens and/or antennas.

In a preferred embodiment, the mobile electronic device housing is selected from the group consisting of a mobile phone housing, a tablet housing, a laptop computer housing and a tablet computer housing. Excellent results were obtained when the part of the mobile electronic device according to the present invention was a mobile phone housing.

The at least one part of the mobile electronic device according to the present invention is advantageously characterized by a thickness of a flat portion of said part being 0.9 mm or less, preferably 0.8 mm or less, more preferably 0.7 mm or less, still more preferably 0.6 mm or less and most preferably 0.5 mm or less on average. The term "on average" is herein intended to denote the average thickness of the part based on the measurement of its thickness on at least 3 points of at least one of its flat portions.

**The polymer composition (C)**

The polymer composition (C) comprises at least one amorphous polyamide (A). It may also comprise additional ingredients as detailed here below.

**The amorphous polyamide (A)**

The polymer composition (C) of the present invention comprises at least one amorphous polyamide (A). The term "polyamide" is generally understood to indicate a polymer comprising recurring units deriving from the polycondensation reaction of at least one diamine and at least one dicarboxylic acid and/or from at least one amino carboxylic acid or lactam. The term amorphous is intended to denote a polymer having a heat of fusion of at most 5.0 J/g, preferably at most 3.0 J/g and particularly preferred at most 1.0 J/g, when measured by Differential Scanning Calorimetry (DSC) at a heating rate of 20°C/min, according to ASTM D3418-12.

The amorphous polyamide (A) is advantageously present in the polymer composition (C) in an amount of at least 20 % by weight, preferably at least 30 % by weight, more preferably at least 35 % by weight, and most preferably at least 40 % by weight, based on the total weight of the polymer composition (C). On the other hand, it is advantageously present in the composition (C) in an amount of at most 70 % by weight, preferably at most 65 % by weight, more preferably at most 60 % by weight, and most preferably at most 55 % by weight, based on the total weight of the polymer composition (C).

The amorphous polyamide (A) has advantageously a glass transition temperature (Tg) of at most 210°C, preferably at most 200°C, more preferably at most 190°C and most preferably at most 180°C. On the other hand, it has a glass transition temperature (Tg) of at least 90°C, preferably at least 100°C, more preferably at least 110°C and most preferably at least 120°C. The glass transition temperature is thereby determined by means of Differential Scanning Calorimetry (DSC) at a heating rate of 20°C/min according to ASTM E1356 - 08. Excellent results were obtained when the amorphous polyamide (A) had a glass transition temperature (Tg) of at least 120°C and a most 180°C, preferably of at least 130°C and at most 160°C.

The recurring units of the amorphous polyamide (A) are derived from the polycondensation of a mixture of monomers comprising :

- at least one aromatic dicarboxylic acid;
- at least one cycloaliphatic diamine comprising from 6 to 12 carbon atoms, and
- at least one third monomer comprising from 10 to 16 carbon atoms selected from the group consisting of an acyclic aliphatic diamine, an acyclic aliphatic dicarboxylic acid and an acyclic aliphatic aminoacid

wherein the aromatic dicarboxylic acid is present in the mixture of monomers in an amount of from 70 to 100 mol %, based on the total amount of all dicarboxylic acids present.

The term "aromatic dicarboxylic acid" is intended to denote a dicarboxylic acid, or a derivative thereof, comprising one or more than one aromatic group. Derivatives of said aromatic dicarboxylic acid are notably acid halogenides, especially chlorides, acid anhydrides, acid salts, acid amides and the like. The herein used expression "derivative thereof" when used in combination with the expressions "carboxylic acid", "dicarboxylic acid", "amine" or "diamine" is intended to denote whatever derivative thereof which is susceptible of reacting in polycondensation conditions to yield an amide bond.

Non limitative examples of aromatic dicarboxylic acids are notably phthalic acids, including isophthalic acid (IA), terephthalic acid (TA) and orthophthalic acid (OA), naphtalenedicarboxylic acids (including 2,6-naphthalene dicarboxylic acid, 2,7-naphthalene dicarboxylic acid,1,4-naphthalene dicarboxylic acid, 2,3-naphthalene dicarboxylic acid, 1,8-naphthalene dicarboxylic acid and 1,2-naphthalene dicarboxylic acid), 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene.

Preferred aromatic dicarboxylic acids are phthalic acids and are selected from the group consisting of isophthalic acid (IA), terephthalic acid (TA) and orthophthalic acid (OA). Excellent results were obtained when using isophthalic acid (IA) and/or terephthalic acid (TA).

According to the present invention, the aromatic dicarboxylic acid is present in the mixture of monomers in an amount of from 70 to 100 mol %, based on the total amount of all dicarboxylic acids present, preferably from 75 to 100 mol %. Excellent results were obtained when the mixture of monomers comprised only aromatic dicarboxylic acids as dicarboxylic acids.

In a preferred embodiment, isophthalic acid (IA) and terephthalic acid (TA) are both present as the only aromatic dicarboxylic acids. Excellent results were obtained when both IA and TA were present in an amount of from 25 mol % to 85 mol %, based on the total amount of all dicarboxylic acids present.

The term "cycloaliphatic diamine" is intended to denote a compound comprising two amino moieties and at least one cycloaliphatic group or a derivative thereof.

The at least one cycloaliphatic diamine comprises from 6 to 12 carbon atoms, preferably from 8 to 10 carbon atoms. It is preferably selected from the group consisting of 1,3-diaminocyclohexane, 1,4-diaminocyclohexane, 1,3-bis(aminomethyl)cyclohexane (BAC), 1,4-bis(aminomethyl)cyclohexane, and isophorononediamine (IPDA). Excellent results were obtained when using BAC and/or IPDA.

The cycloaliphatic diamine comprising from 6 to 12 carbon atoms is advantageously present in the mixture of monomers in an amount of at least 10 mol %, preferably at least 15 mol %, more preferably at least 20 mol %, still more preferably at least 25 mol % and most preferably at least 30 mol %, based on the total amount of all diamines present. In parallel, it is advantageously present in the mixture of monomers in an amount of at most 90 mol %, preferably at most 85 mol %, more preferably at most 80 mol %, based on the total amount of all diamines present. Excellent results were obtained when the cycloaliphatic diamine comprising from 6 to 12 carbon atoms was present in the mixture of monomers in an amount of at least 30 mol % and at most 80 mol %.

The at least one third monomer comprising from 10 to 16 carbon atoms is selected from the group consisting of :

> (i) an acyclic aliphatic diamine,
> (ii) an acyclic aliphatic dicarboxylic acid and
> (iii) an acyclic aliphatic aminoacid,

each of which being different from the aromatic dicarboxylic acid and the cycloaliphatic diamine.

The at least one third monomer comprises preferably from 10 to 14 carbon atoms, more preferably it comprises from 10 to 12 carbon atoms. This category of third monomer can easily be derived from renewable resources such as castor beans (i.e. be bio-sourced).

The acyclic aliphatic diamine comprising from 10 to 16 carbon atoms may be selected from the group consisting of 1,10-diaminodecane, 1,8-diamino-1,3-dimethyloctane, 1,8-diamino-1,4-dimethyloctane, 1,8-diamino-2,4-dimethyloctane, 1,8-diamino-3,4-dimethyloctane, 1.8-diamino-4,5-dimethyloctane, 1,8-diamino-2,2-dimethyloctane, 1.8-diamino-3,3-dimethyloctane, 1,8-diamino-4,4-dimethyloctane, 1,6-diamino-2,4-diethylhexane, 1,9-diamino-5-methylnonane, 1,11-diaminoundecane, 1,12-diaminododecane, 1,13-diaminotridecane, 1,14-diaminotetradecane, 1,15-diaminopentadecane and 1,16-diaminohexadecane. It is preferably selected from the group consisting of 1,10-diaminodecane, 1,11-diaminoundecane, 1,12-diaminododecane, 1,14-diaminotetradecane. Most preferably, it is selected from 1,10-diaminodecane, 1,11-diaminoundecane and 1,12-diaminododecane. The acyclic aliphatic diamine comprises preferably from 10 to 12 carbon atoms. Excellent results were obtained when using 1,10-diaminodecane (or 1,10-decamethylenediamine - DMDA) and 1,12-diaminododecane (or 1,12-dodecamethylenediamine - DDDA).

The acyclic aliphatic diamine comprising from 10 to 16 carbon atoms is preferably present in the mixture of monomers in an amount of at least 5 mol %, more preferably at least 10 mol %, still more preferably at least 15 mol % and most preferably at least 20 mol %, based on the total amount of all diamines present. Also, it is preferably present in the mixture of monomers in an amount of at most 90 mol %, more preferably at most 85 mol %, still more preferably at most 80 mol % and most preferably at most 75 mol %, based on the total amount of all diamines present.

Excellent results were obtained when the acyclic aliphatic diamine comprising from 10 to 16 carbon atoms was present in the mixture of monomers in an amount of 45-65 mol %, based on the total amount of all diamines present.

The acyclic aliphatic dicarboxylic acid comprising from 10 to 16 carbon atoms may be selected from the group consisting of sebacic acid $[HOOC-(CH_2)_8-COOH]$, undecandioic acid $[HOOC-(CH_2)_9-COOH]$, dodecandioic acid $[HOOC-(CH_2)_{10}-COOH]$, tridecandioic acid $[HOOC-(CH_2)_{11}-COOH]$, tetradecandioic acid $[HOOC-(CH_2)_{12}-COOH]$, pentadecandioic acid $[HOOC-(CH_2)_{13}-COOH]$ and hexadecandioic acid $[HOOC-(CH_2)_{14}-COOH]$. Most preferably, it is selected from sebacic acid, undecandioic acid and dodecandioic acid. Excellent results were obtained when using sebacic acid.

The acyclic aliphatic dicarboxylic acid comprising from 10 to 16 carbon atoms is preferably present in the mixture of monomers in an amount of at least 5 mol %, more preferably at least 10 mol %, still more preferably at least 15 mol % and most preferably at least 20 mol %, based on the total amount of all dicarboxylic acids present. Also, it is preferably present in the mixture of monomers in an amount of at most 90 mol %, more preferably at most 85 mol %, still more preferably at most 80 mol % and most preferably at most 75 mol %, based on the total amount of all dicarboxylic acids present.

Excellent results were obtained when the acyclic aliphatic dicarboxylic acid comprising from 10 to 16 carbon atoms was present in the mixture of monomers in an amount of 20-60 mol %, based on the total amount of all dicarboxylic acids present.

The acyclic aliphatic aminoacid comprising from 10 to 16 carbon atoms may be selected from the group consisting of aminodecanoic acid, aminoundecandecanoic acid, aminododecanoic acid, aminotridecanoic acid, aminotetradecanoic acid, aminopentadecanoic acid and aminohexadecanoic acid. The acyclic aliphatic aminoacid is preferably a $\alpha,\omega$-aminoacid. Most preferably, it is selected from 1-aminodecanoic acid, 1-aminoundecandecanoic acid, 1-aminododecanoic acid. Excellent results were obtained when using 1-aminoundecandecanoic acid.

In addition to the above described monomers (i.e. the aromatic dicarboxylic acids, the cycloaliphatic diamine comprising from 6 to 12 carbon atoms, the acyclic aliphatic diamine comprising from 10 to 16 carbon atoms, the acyclic aliphatic dicarboxylic acids comprising from 10 to 16 carbon atoms and the acyclic aliphatic aminoacid comprising from 10 to 16 carbon atoms), the amorphous polyamide (A) may comprise recurring units derived from the polycondensation of additional dicarboxylic acids, and/or additional diamines, and/or additional aminoacids and/or lactams.

Non limitative examples of said additional dicarboxylic acids are notably oxalic acid (HOOC-COOH), malonic acid $(HOOC-CH_2-COOH)$, succinic acid $[HOOC-(CH_2)_2-COOH]$, glutaric acid $[HOOC-(CH_2)_3-COOH]$, 2,2-dimethyl-glutaric acid $[HOOC-C(CH_3)_2-(CH_2)_2-COOH]$, adipic acid $[HOOC-(CH_2)_4-COOH]$, 2,4,4-trimethyl-adipic acid $[HOOC-CH(CH_3)-CH_2-C(CH_3)_2-CH_2-COOH]$, pimelic acid $[HOOC-(CH_2)_5-COOH]$, suberic acid $[HOOC-(CH_2)_6-COOH]$, azelaic acid $[HOOC-(CH_2)_7-COOH]$, 1,4-norbornane dicarboxylic acid, 1,3-adamantane dicarboxylic acid, cis and/or trans cyclohexane-1,4-dicarboxylic acid and cis and/or trans cyclohexane-1,3-dicarboxylic acid.

Suitable additional diamines can be aromatic or aliphatic.

Non limitative examples of said additional aliphatic diamines are notably 1,2-diaminoethane, 1,2-diaminopropane, propylene-1,3-diamine, 1,3-diaminobutane, 1,4-diaminobutane, 1,5-diaminopentane, 1,4-diamino-1,1-dimethylbutane, 1,4-diamino-1-ethylbutane, 1,4-diamino-1,2-dimethylbutane, 1,4-diamino-1,3-dimethylbutane, 1,4-diamino-1,4-dimethylbutane, 1,4-diamino-2,3-dimethylbutane, 1,2-diamino-1-butylethane, 1,6-diaminohexane, 1,7-diaminoheptane, 1,8-diamino-octane, 1,6-diamino-2,5-dimethylhexane, 1,6-diamino-2,4-dimethylhexane, 1,6-diamino-3,3-dimethylhexane, 1,6-diamino-2,2-dimethylhexane, 1,9-diaminononane, 2-methylpentamethylenediamine, 1,6-diamino-2,2,4-trimethylhexane, 1,6-diamino-2,4,4-trimethylhexane, 1,7-diamino-2,3-dimethylheptane, 1,7-diamino-2,4-dimethylheptane, 1,7-diamino-2,5-dimethylheptane, 1,7-diamino-2,2-dimethylheptane and bis(3-methyl-4aminocyclohexyl)-methane.

Non limitative examples of said additional aromatic diamines are notably diamines selected from the group consisting of meta-phenylene diamine, p-phenylene diamine (PPD), 3,4'-diaminodiphenyl ether (3,4'-ODA), 4,4'-diaminodiphenyl ether (4,4'-ODA), meta-xylylene diamine and paraxylylene diamine.

Suitable additional aminoacids can be aromatic or aliphatic.

Non limitative examples of said additional aminoacids are notably naturally occurring aminoacids (such as histidine, isoleucine, leucine, lysine, methionine, phenylalanine, threonine, tryptophan, valine, alanine, asparagine, aspartic acid, glutamic acid, arginine, cysteine, glutamine, tyrosine, glycine, ornithine, proline, and serin), or other non natural amino acids such as hydroxytryptophan. Additional aminoacids comprise preferably 4, 6, 7 or 8 carbon atoms.

Non limitative examples of said lactams may be selected from the group consisting of [beta]-propiolactam, [gamma]-butyrolactam, [delta]-valerolactam, [epsilon]-caprolactam, and [omega]-lauryl lactam.

Preferred embodiments of the amorphous polyamide (A) are those wherein it comprises :

- recurring units formed by the polycondensation reaction between TA, IA, BAC and DMDA;
- recurring units formed by the polycondensation reaction between TA, IA, BAC and DDDA;
- recurring units formed by the polycondensation reaction between IA, BAC and DMDA;
- recurring units formed by the polycondensation reaction between IA, sebacic acid, BAC and DMDA;
- recurring units formed by the polycondensation reaction between TA, IA, IPDA and DMDA, or
- recurring units formed by the polycondensation reaction between TA, sebacic acid, BAC and IPDA.

The amorphous polyamide (A) may also be endcapped by any end capping agent. The term "end capping agent" indicates one or more compound which reacts with the ends of a polycondensate, capping the ends and limiting the polymer molecular weight. The end capping agent is typically selected from the group consisting of an acid comprising only one reactive carboxylic acid group [acid (MA)] and an amine comprising only one reactive amine group [amine (MN)], and mixtures thereof. The expression "acid/amine comprising only one reactive carboxylic acid/amine group" is intended to encompass not only mono-carboxylic acids or mono-amines but also acids comprising more than one carboxylic acid group or derivative thereof and amines comprising more than one amine or derivative thereof, but wherein only one of said carboxylic acid/amine group has reactivity with the polycondensate obtained from the polycondensation of the above mentioned diamine(s) and dicarboxylic acid(s).

Among suitable [acids (MA)] mention can be notably made of acetic acid, propionic acid, butyric acid, valeric acid, caproic acid, caprylic acid, lauric acid, stearic acid, cyclohexanecarboxylic acid and benzoic acid. [Acid (MA)] is preferably selected from acetic acid, benzoic acid and mixture thereof.

Among suitable [amines (MN)] mention can be notably made of methylamine, ethylamine, butylamine, octylamine, aniline, toluidine, propylamine, hexylamine, dimethylamine and cyclohexylamine.

The end-capping agent is generally used in an amount of more than 0.1 mol %, preferably more than 0.5 mol %, still more preferably more than 0.8 mol %, even more preferably more than 1 mol %, based on the total number of moles of the dicarboxylic acids, if [acids (MA)] are used as end-capping agent or based on the total number of the diamines, if [amines (MN)] are used as end-capping agent. The end-capping agent is generally used in an amount of less than 6.5 mol %, preferably less than 6.2 mol %, still more preferably less than 6 mol %, even more preferably less than 5.5 mol %, based on the total number of moles of the dicarboxylic acids, if [acids (MA)] are used as end-capping agent or based on the total number of the diamines, if [amines (MN)] are used as end-capping agent.

**Other polymers optionally present**

The polymer composition (C) may further comprise at least one other polymer, different from the amorphous polyamide (A) depicted above. It may for example comprise other amorphous polyamides, crystalline or semi-crystalline polyamides i.e. a polyamide having a heat of fusion of at least 6.0 J/g, preferably at least 10.0 J/g and particularly preferred at least 20.0 J/g, when measured by Differential Scanning Calorimetry (DSC) at a heating rate of 20°C/min, according to ASTM D3418-12 (such as PA66, PA6T/6I, PA10T/10I, PA9T, PA10T, PA12T, PA10,10 PA 6T/6I/66 and PA MXD6).

The polymer composition (C) may also comprise other polymers in addition to polyamides, such as aliphatic polyesters, semiaromatic polyesters, cycloaliphatic polyesters and cycloaliphatic aromatic mixed polyesters, aromatic polycarbonates, aliphatic polycarbonates, polylactides, polyglycolides, polyhydroxyalkanoates and the like.

In particular, the polymer composition (C) may optionally further comprise an polymeric impact modifier. Preferred polymeric impact modifiers include those typically used for polyamides, including carboxyl-substituted polyolefins, which are polyolefins that have carboxylic moieties attached thereto, either on the polyolefin backbone itself or on side chains. By "carboxylic moieties" is meant carboxylic groups such as one or more of dicarboxylic acids, diesters, dicarboxylic monoesters, acid anhydrides, and monocarboxylic acids and esters. Useful impact modifiers include dicarboxyl-substituted polyolefins, which are polyolefins that have dicarboxylic moieties attached thereto, either on the polyolefin backbone itself or on side chains. By "dicarboxylic moiety" is meant dicarboxylic groups such as one or more of dicarboxylic acids, diesters, dicarboxylic monoesters, and acid anhydrides. The impact modifier may preferably be based on an ethylene/alpha-olefin polyolefin. Diene monomers such as 1,4-butadiene; 1,4-hexadiene; or dicyclopentadiene may optionally be used in the preparation of the polyolefin. Preferred polyolefins include ethylenepropylene-diene (EPDM) polymers made from 1,4-hexadiene and/or dicyclopentadiene and styrene-ethylene-butadiene-styrene (SEBS) polymers. As will be understood by those skilled in the art, the impact modifier may or may not have one or more carboxyl moieties attached thereto. Suitable impact modifiers may also include ionomers. By an ionomer is meant a carboxyl group containing polymer that has been neutralized or partially neutralized with metal cations such as zinc, sodium, or lithium and the like.

More preferably, the polymer composition (C) invention contains less than 30 % by weight, more preferably less than 25 % by weight, still more preferably less than 20 % by weight of other polymers (i.e. different from the amorphous polyamide (A)), based on the total weight of the polymer composition (C). In certain specific embodiments, it is preferable that the polymer composition (C) is free of any polymer, different from the amorphous polyamide (A). In other specific embodiments, it is preferable that the polymer composition (C) comprises at least one other polymer, different from the amorphous polyamide (A).

**Reinforcing fillers**

The polymer composition (C) may further comprise at least one reinforcing filler. Reinforcing fillers are well known by the skilled in the art. They are preferably selected from fibrous and particulate fillers different from the pigment as defined above. More preferably, the reinforcing filler is selected from mineral fillers (such as talc, mica, kaolin, calcium carbonate, calcium silicate, magnesium carbonate), glass fiber, carbon fibers, synthetic polymeric fiber, aramid fiber, aluminum fiber, titanium fiber, magnesium fiber, boron carbide fibers, rock wool fiber, steel fiber, wollastonite etc. Still more preferably, it is selected from mica, kaolin, calcium silicate, magnesium carbonate, glass fiber and wollastonite etc.

Preferably, the filler is chosen from fibrous fillers. A particular class of fibrous fillers consists of whiskers, i.e. single crystal fibers made from various raw materials, such as $Al_2O_3$, SiC, BC, Fe and Ni.

In a preferred embodiment of the present invention the reinforcing filler is chosen from wollastonite and glass fiber. Among fibrous fillers, glass fibers are preferred ; they include chopped strand A-, E-, C-, D-, S-, T- and R-glass fibers, as described in chapter 5.2.3, p. 43-48 of Additives for Plastics Handbook, 2nd edition, John Murphy.

Glass fibers optionally comprised in polymer composition (C) may have a circular cross-section or a non-circular cross-section (such as an oval or rectangular cross-section).

When the glass fibers used have a circular cross-section, they preferably have a diameter of 3 to 30 $\mu$m and particularly preferred of 5 to 10 $\mu$m. Different sorts of glass fibers with a circular cross-section are available on the market depending on the type of the glass they are made of. One may notably cite glass fibers made from E- or S-glass.

Good results were obtained with standard E-glass material with a non-circular cross section. Excellent results were obtained when the polymer composition with S-glass fibers with a round cross-section and, in particular, when using round cross-section with a 6 $\mu$m diameter (E-Glass or S-glass).

The glass fibers can be added to the polymer composition (C) as long glass fibers, chopped strands, milled short glass fibers, or other suitable forms known to those skilled in the art.

The weight percent of the reinforcing filler in the total weight of the polymer composition (C) is generally of at least 10 wt. %, preferably of at least 20 wt. %, more preferably of at least 25 wt. % and most preferably of at least 30 wt. %. Besides, the weight percent of the reinforcing filler in the total weight of the polymer composition (C) is generally of at most 70 wt. %, preferably of at most 60 wt. % and most preferably of at most 50 wt. %.

Excellent results were obtained when the reinforcing filler was used in an amount of 10-60 wt. %, preferably of 30-50 wt. %, based on the total weight of the polymer composition (C).

**Pigments**

It is often required that the mobile electronic devices according to the invention are colored. The polymer composition (C) may thus further comprise at least one pigment, different from the above mentioned reinforcing filler. The pigment may be selected from the group consisting of carbon black, zinc sulfide and titanium dioxide. When present, pigments of the polymer composition (C) are advantageously in the form of particles. The shape of the particles is not particularly limited ; they may be notably round, flaky, flat and so on.

In some preferred embodiment, the pigment used in the polymer composition (C) is titanium dioxide. The form of titanium dioxide is not particularly limited, and a variety of crystalline forms such as the anatase form, the rutile form and the monoclinic type can be used. However, the rutile form is preferred due its higher refraction index and its superior light stability. Titanium dioxide may be treated or not with a surface treatment agent. Preferably the average particle size of the titanium oxide is in the range of 0.15 $\mu$m to 0.35 $\mu$m

In some other preferred embodiment, the pigment used in the polymer composition (C) is zinc sulfide.

The weight percent of the pigment in the total weight of the polymer composition (C) is generally of at least 1 wt. %, preferably of at least 2 wt. %, more preferably of at least 4 wt. % and most preferably of at least 8 wt. %. Besides, the weight percent of the pigment in the total weight of the polymer composition (C) generally of at most 20 wt. %, preferably of at most 15 wt. %, more preferably of at most 12 wt. % and most preferably of at most 10 wt. %.

Excellent results were obtained when zinc sulfide was used in an amount of 5-15 wt. %, preferably of 8-10 wt. %, based on the total weight of the polymer composition (C).

**Other optional additives of the polymer composition (C)**

Of course the polymer composition (C) can contain in addition normal additives which are known in general to the person skilled in the art and are selected from the group comprising halogen-containing flame retardant agents, halogen-free flame retardant agents, stabilizers, antioxidants, light protection agents, UV stabilizers, UV absorbers, UV blockers, inorganic heat stabilizers, organic heat stabilizers, conductivity additives, optical brighteners, processing aids, nucleation agents, crystallization accelerators, crystallization inhibitors, flow aids, lubricants, mold-release agents, softeners and mixtures thereof.

In a particular embodiment, the polymer composition (C) further comprises halogen-free flame retardant agent(s).

The additives may be present in the polymer composition (C) in an amount of at least 1 %, 2 %, 5 % or even 10 % by weight, based on the total weight of the polymer composition (C). On the other hand, they may be present in the polymer composition (C) in an amount of at most 20 %, 17 %, 15 % or 12 % by weight, based on the total weight of the polymer composition (C).

The method for preparing the polymer composition (C) is not specifically limited. The polymer composition (C) may be generally prepared by blending predetermined amounts of the above-described various components, the blend being subsequently melted and kneaded. The melting and kneading of the blend may be carried out by any known method. For example, a single-screw extruder, a twin-screw extruder, a Banbury mixer or similar devices may be used. In this case, all raw materials may be simultaneously fed to a base part of an extruder and melted and kneaded together. Alternately, the amorphous polyamide (A) and the optional other polymers (different from the amorphous polyamide (A)) are first fed and melted, to which a filler such as glass fiber is side-fed and kneaded together. Additionally, there may be adopted a method in which two or more compounded masses having different additives or compositions are first pelletized and the resulting pellets are blended, or a method in which part of a powder component or components or part of a liquid component or components is blended separately from the other components.

Another objective of the present invention is to provide a method for the manufacture of the above described part of a mobile electronic device. Such method is not specifically limited. The polymer composition (C) may be generally processed by injection molding, extrusion or other shaping technologies. It preferably comprises the injection molding of the polymer composition (C). Thus, the method for the manufacture of the above described part of a mobile electronic device includes preferably the step of injection molding and solidification of the polymer composition (C).

Another objective of the present invention is to provide a method for the manufacture of the above described mobile electronic device comprising at least one part comprising the polymer composition (C), said method including the steps of:

- providing as components at least a circuit board, a screen and a battery;
- providing at least one part comprising the polymer composition (C);
- assembling at least one of said components with said part or mounting at least one of said components on said part.

Mobile electronic devices are very often commercialized in a black color. However, there is a growing market interest in colored mobile electronic devices. The present invention allows the manufacture of colored mobile electronic device, and in particular colored mobile electronic device housings.

The above described method for the manufacture of the mobile electronic device may thus further include an additional step of painting or coating said part comprising the polymer composition (C).

Excellent results were obtained when the mobile electronic device was first painted with a primer coating paint and then with a top coating paint. These coatings gave surprisingly excellent results in adhesion tests. In addition, the present invention provides the great benefit that the polymer composition (C) has an excellent colorability using the above described pigments and also an excellent paintability using the above mentioned paints.

The present invention is intended to be explained in more detail with reference to the subsequent examples without wishing to restrict the latter by the special embodiments shown here.

EXAMPLES

**Polymerization**

Polyamides E1-E11 and CE1-CE8 were prepared as detailed below using commercially available monomers.

*Preparation of the polyamide E1 :*

A stirred batch vessel was charged with 48,12 kg distilled water, a diamine component consisting of 19,85 kg of 1,10-diaminodecane (or 1,10-decamethylenediamine - DMDA) and 39,87 kg of 1,3-bis(aminomethyl)cyclohexane (BAC); and a dicarboxylic acid component consisting of 44,21 kg of terephthalic acid (TA) and 18,95 kg of isophthalic acid (IA). The reactor was also charged with 34 g phosphorus acid and 461 g of glacial acetic acid. A salt solution was obtained by heating the above described mixture at 145°C. The content was pumped continuously to a reactor zone maintained at about 180 psig and 216°C, then to a zone maintained at about 298°C and 1800 psig, then through a tubular reactor at 100 psig and heated with oil at 349°C and finally into a vented Werner and Pfleiderer Corporation ZSK-30® twin-screw extruder equipped with a forward vacuum vent. The die temperature was set at 335°C. The finished polymer was extruded through a strand die into a water bath at a through-put rate of about 5.5-6.5 kg/hr and then chopped into pellets.

*Preparation of the polyamide E2 :*

Polyamide E2 was prepared similarly to the procedure described for polyamide E1, except that the following amounts of diamine and dicarboxylic acid monomers were used : DMDA (19,85 kg), BAC (39,87 kg), TA (18,95 kg) and IA (44,21 kg).

*Preparation of the polyamide E3 :*

Polyamide E3 was prepared similarly to the procedure described for polyamide E1, except that the following amounts of diamine and dicarboxylic acid monomers were used : 1,12-dodecamethylenediamine (DDDA, 23,08 kg), BAC (39,87 kg), TA (18,95 kg) and IA (44,21 kg).

*Preparation of the polyamide E4 :*

Polyamide E4 was prepared similarly to the procedure described for polyamide E1, except that the following amounts of diamine and dicarboxylic acid monomers were used : DMDA (33,08 kg), BAC (28,95 kg), TA (18,95 kg) and IA (44,21 kg).

*Preparation of the polyamide E5 :*

Polyamide E5 was prepared similarly to the procedure described for polyamide E1, except that the following amounts of diamine and dicarboxylic acid monomers were used : DDDA (42,32 kg), BAC (26,22 kg), TA (18,95 kg) and IA (44,21 kg).

*Preparation of the polyamide E6 :*

Polyamide E6 was prepared similarly to the procedure described for polyamide E1, except that the following amounts of diamine and dicarboxylic acid monomers were used : DMDA (36,39 kg), BAC (26,22 kg), TA (18,95 kg) and IA (44,21 kg).

*Preparation of the polyamide E7 :*

Polyamide E7 was prepared similarly to the procedure described for polyamide E1, except that the following amounts of diamine and dicarboxylic acid monomers were used : DMDA (39,70 kg), BAC (23,49 kg), TA (18,95 kg) and IA (44,21 kg).

*Preparation of the polyamide E8 :*

Polyamide E8 was prepared similarly to the procedure described for polyamide E1, except that the following amounts of diamine and dicarboxylic acid monomers were used : DMDA (46,32 kg), BAC (18,02 kg), TA (9,47 kg) and IA (53,68 kg).

*Preparation of the polyamide E9 :*

Polyamide E9 was prepared similarly to the procedure described for polyamide E1, except that the following amounts of diamine and dicarboxylic acid monomers were used : DMDA (33,08 kg), BAC (28,95 kg) and IA (63,16 kg).

*Preparation of the polyamide E10:*

Polyamide E10 was prepared similarly to the procedure described for polyamide E1, except that the following amounts of diamine and dicarboxylic acid monomers were used : DMDA (16,54 kg), BAC (42,60 kg), IA (47,37 kg) and sebacic acid (SA, 19,22 kg).

*Preparation of the polyamide E11 :*

Polyamide E11 was prepared similarly to the procedure described for polyamide E1, except that the following amounts of diamine and dicarboxylic acid monomers were used : DMDA (46,32kg), IPDA (21,58 kg), TA (25,26 kg) and IA (37,89 kg).

*Preparation of the polyamide CE1 :*

Polyamide CE1 was prepared similarly to the procedure described for polyamide E1, except that the following amounts of diamine and dicarboxylic acid monomers were used : BAC (56,26 kg), TA (18,95 kg) and IA (44,21 kg).

*Preparation of the polyamide CE2 :*

Polyamide CE2 was prepared similarly to the procedure described for polyamide E1, except that the following amounts of diamine and dicarboxylic acid monomers were used : BAC (39,87 kg), 1,9-nonamethylene diamine (NDA, 18,23 kg), TA (18,95 kg) and IA (44,21 kg).

*Preparation of the polyamide CE3 :*

Polyamide CE3 was prepared similarly to the procedure described for polyamide E1, except that the following amounts of diamine and dicarboxylic acid monomers were used : BAC (39,87 kg), 2-methylpentamethylenediamine (MPDA, 13,39 kg), TA (18,95 kg) and IA (44,21 kg).

*Preparation of the polyamide CE4 :*

Polyamide E2 was prepared similarly to the procedure described for polyamide E1, except that the following amounts of diamine and dicarboxylic acid monomers were used : DMDA (68,15 kg), TA (18,95 kg) and IA (44,21 kg).

*Preparation of the polyamide CE5 :*

Polyamide CE5 was prepared similarly to the procedure described for polyamide E1, except that the following amounts of diamine and dicarboxylic acid monomers were used : DMDA (33,08 kg), BAC (28,95 kg), IA (31,58 kg) and SA (38,44 kg).

*Preparation of the polyamide CE6 :*

Polyamide CE6 was prepared similarly to the procedure described for polyamide E1, except that the following amounts of diamine and dicarboxylic acid monomers were used : BAC (56,26 kg), IA (31,58 kg) and SA (38,44 kg).

*Preparation of the polyamide CE7 :*

Polyamide CE7 was prepared similarly to the procedure described for polyamide E1, except that the following amounts of diamine and dicarboxylic acid monomers were used : BAC (56,26 kg) and SA (76,89 kg).

*Preparation of the polyamide CE8 :*

Polyamide CE8 was prepared similarly to the procedure described for polyamide E1, except that the following amounts of diamine and dicarboxylic acid monomers were used : 1,6-hexamethylenediamine (HMDA, 45,96 kg), TA (18,95 kg) and IA (44,21 kg).

The monomer molar compositions (in %) of Examples E1 to E11 are summarized in Table 1, while the monomer molar compositions of Comparative Examples CE1 to CE8 are summarized in Table 2. The molar compositions for the dicarboxylic acids are based on the total amount of dicarboxylic acids. The molar compositions of the diamines are based on the total amount of diamines. The molar composition of the aminoacid is based on the total amount of dicarboxylic acids or diamines.

Table 1 : monomer molar compositions of Examples E1 to E11

| | E1 | E2 | E3 | E4 | E5 | E6 | E7 | E8 | E9 | E10 | E11 |
|---|---|---|---|---|---|---|---|---|---|---|---|
| *Aromatic dicarboxylic acids* | | | | | | | | | | | |
| TA | 70 | 30 | 30 | 30 | 30 | 30 | 30 | 15 | - | - | 40 |
| IA | 30 | 70 | 70 | 70 | 70 | 70 | 70 | 85 | 100 | 75 | 60 |
| *Acyclic aliphatic dicarboxylic acid* | | | | | | | | | | | |
| SA | - | - | - | - | - | - | - | - | - | 25 | - |
| *Cycloaliphatic diamine* | | | | | | | | | | | |
| BAC | 70 | 70 | 70 | 50 | 45 | 45 | 40 | 30 | 50 | 75 | - |
| IPDA | - | - | - | - | - | - | - | - | - | - | 30 |
| *Acyclic aliphatic diamine* | | | | | | | | | | | |
| DMDA | 30 | 30 | - | 50 | - | 55 | 60 | 70 | 50 | 25 | 70 |
| DDDA | - | - | 30 | - | 55 | - | - | - | - | - | - |

Table 2 : monomer molar compositions of Comparative Examples CE1 to CE8

| | CE1 | CE2 | CE3 | CE4 | CE5 | CE6 | CE7 | CE8 |
|---|---|---|---|---|---|---|---|---|
| **Dicarboxylic acids** | | | | | | | | |
| *Aromatic dicarboxylic acids* | | | | | | | | |
| TA | 30 | 30 | 30 | 30 | - | - | - | 30 |
| IA | 70 | 70 | 70 | 70 | 50 | 50 | - | 70 |
| *Acyclic aliphatic dicarboxylic acid* | | | | | | | | |
| SA | - | - | - | - | 50 | 50 | 100 | - |
| **Diamines** | | | | | | | | |
| *Cycloaliphatic diamine* | | | | | | | | |
| BAC | 100 | 70 | 70 | - | 50 | 100 | 100 | - |
| *Acyclic aliphatic diamine* | | | | | | | | |
| DMDA | - | - | - | 100 | 50 | - | - | - |
| *Other diamines* | | | | | | | | |
| NDA | - | 30 | | | | | | - |
| MPDA | - | - | 30 | - | - | - | - | - |
| HMDA | - | - | - | - | - | - | - | 100 |

## Compounding

The following commercially available materials were used :

*Reinforcing fillers :*

GF-1 : CSG 3PA820 from Nittobo - non-circular cross section fibers (also called flat fibers or cocoon shaped fibers).
GF-2 : NEG T-289DE - circular cross section glass fibers from Nippon Electric - E-Glass fiber with a 6$\mu$m diameter.

*Additive package :*

Blend of an antioxidant (Irganox® B1171 from BASF), UV and Light stabilizers (Tinuvin® 234 from BASF and Chimassorb® 944 LD from BASF) and a flow aid (calcium stearate from Nexeo Solutions).

*General procedure for the preparation of the compositions*

The polyamide resins E4, E6, E7, E10 and CE8 described above were fed to the first barrel of a ZSK-26 twin screw extruder comprising 12 zones via a loss in weight feeder. The barrel settings were in the range of 280-330°C and the resins were melted before zone 5. The other ingredients were fed at zone 5 through a side stuffer via a loss in weight feeder. The screw rate ranged from 180-250 rpm. The extrudates were cooled and pelletized using conventional equipment. The results are summarized in Table 3, indicating each ingredient used, and their amount given in weight %.

Table 3 : List of ingredients and quantities used (wt. %) in the prepared compositions

|  | A | B | C | D | E | F | *G* |
|---|---|---|---|---|---|---|---|
| **Polyamides** |  |  |  |  |  |  |  |
| E4 | 49.2 |  |  |  |  |  |  |
| E6 |  | 49.2 |  |  |  |  |  |
| E7 |  |  | 49.2 | 49.2 |  |  |  |
| E10 |  |  |  |  | 49.2 | 49.2 |  |
| CE8 |  |  |  |  |  |  | *49.2* |
|  |  |  |  |  |  |  |  |
| **Reinforcing fillers** |  |  |  |  |  |  |  |
| GF-1 | 50 | 50 | 50 |  | 50 |  | *50* |
| GF-2 |  |  |  | 50 |  | 50 |  |
|  |  |  |  |  |  |  |  |
| **Additive Package** | 0.8 | 0.8 | 0.8 | 0.8 | 0.8 | 0.8 | *0.8* |

**Measurement of Glass Transition Temperature**

The glass transition temperatures of the different neat polyamides as well as those of the conditioned samples were measured according to ASTM E1356 using a TA Instruments Model Q20/Q1000 Differential Scanning Calorimeter and Liquid Nitrogen Cooling System operated with TA Thermal Advantage and Universal Analysis software. The instrument was calibrated using a heating and cooling rate of 20°C/min in nitrogen atmosphere. The measurements were also carried out using a heating and cooling rate of 20°C/min in nitrogen atmosphere.

**Measurement of Moisture Uptake**

The moisture uptake of the neat polyamides was measured using compression molded parts (1mm x 12mm x 50 mm). The samples were first dried at 90°C under vacuum for 24 hours. Initial weights of the samples were taken. The parts were then conditioned inside a humidity-controlled oven that was set at 80°C and 85 % relative humidity. The gain in weight of the samples was measured every 24 hours until equilibrium moisture uptake was reached. The moisture uptake was calculated as follows :

$$\text{Moisture Uptake} = [\text{Weight}_{\text{(conditioned)}} - \text{Weight}_{\text{(dry)}}] \times 100 / \text{Weight}_{\text{(dry)}}$$

The average moisture uptake of at least 5 specimens for each polyamide tested is reported in Table 4.

**Mechanical tests**

All the test bodies were used in the dry state. For this purpose, the test bodies were stored after the injection molding for at least 48 h at room temperature in dry surroundings. Using the obtained pellets of each resin composition, ISO tensile test pieces (10 mm x 10 mm x 4 mm) were molded. The tensile properties of the materials were measured as per ISO 527 test procedure, while the notched and unnotched Izod impact strengths were measured as per ISO 180 test procedure.

**Results**

The results of the glass transition temperatures and the moisture uptake are presented in Tables 4, while Table 5 shows the results of the mechanical tests carried out on compounds A-H.

Table 4 : Tg and moisture uptake of the exemplified polyamides

|  | Tg dry (°C) | Tg wet (°C) | Moisture uptake (%) |
|---|---|---|---|
| E1 | 174 | 110 | 5.2 |
| E2 | 171 | 110 | 5.0 |
| E3 | 165 | - | - |
| E4 | 152 | 97 | 4.7 |
| E5 | 135 | 85 | 4.2 |
| E6 | 148 | 96 | 4.6 |
| E7 | 144 | 91 | 4.4 |
| E8 | 132 | 84 | 4.4 |
| E9 | 149 | 93 | 4.7 |
| E10 | 143 | 89 | 5.0 |
| E11 | 147 | 100 | 3.7 |
| *CE1* | *200* | - | - |
| *CE2* | *173* | 107 | *5.7* |
| *CE3* | *184* | - | - |
| *CE4* | *110* | - | - |
| *CE5* | *96* | *54* | *4.7* |
| *CE6* | *134* | *76* | *5.2* |
| *CE7* | *84* | - | - |
| *CE8* | *125* | *59* | *6.3* |

Ideally the resins to be used for molding parts of mobile electronic devices should have a glass transition temperature (Tg) high enough to be able to withstand the various environments where they are used but also low enough to be easily processable and moldable using hot water equipments. The best results are obtained when the Tg is in the range between 120°C and 180°C. Also, the Tg of the material after equilibrium moisture uptake (Tg wet) should be of at least 80°C (to avoid the material to enter a rubber state when the mobile electronic device in use reaches high temperatures, typically up to 80°C).
In addition, such resins for molding parts of mobile electronic devices should have a low moisture uptake, preferably lower than 5.5 %, more preferably lower than 5.3 %.
The Applicant has found that amorphous polyamides comprising recurring units derived from the polycondensation of a mixture of monomers comprising at least one aromatic dicarboxylic acid (such as IA or TA), at least one cycloaliphatic diamine comprising from 6 to 12 carbon atoms (such as BAC or IPDA), and at least one third monomer comprising from 10 to 16 carbon atoms selected from the group consisting of an acyclic aliphatic diamine (such as DMDA or DDDA), an acyclic aliphatic dicarboxylic acid (such as SA) or an acyclic aliphatic aminoacid (such as AUDA) where the aromatic dicarboxylic acid is present in the mixture of monomers in an amount of from 70 to 100 mol % (based on the total amount of all dicarboxylic acids present) feature an extraordinary set of properties which make them candidates of choice for the manufacture of parts of mobile electronic devices.

As it can be seen from the results shown in Table 4, resins E1-E11 - corresponding to the amorphous polyamide (A) as above described - all present a glass transition temperature (as measured on the dry resin, i.e. Tg dry) in the range between 120 to 180°C.

On the other hand, the resins CE1, CE3, CE4 and CE7 which do not comprise recurring units derived from the exceptional combination of the above mentioned monomers fail to present a glass transition temperature in an acceptable range. All exemplified resins of comparative examples CE1, CE3, CE4 and CE7 feature either a too high (above 180°C) or a too low glass transition temperature (lower than 120°C).

Interestingly, resins CE2, which do not comprise the third monomer of the amorphous polyamide (A), features a too high moisture uptake (5.7 %), not acceptable for the requirements set forth by the specific end use of such resin in mobile electronic devices.

Examples CE5 and CE6 are notable since both comprise the above described discovered combination of diamines and dicarboxylic acids but fail to comprise aromatic dicarboxylic acids in an amount of from 70 to 100 mol %, based on the total amount of all dicarboxylic acids present. CE5 and CE6 both comprise only 50 mol % ofIA as the only aromatic dicarboxylic acid. As it can be read from Table 4, CE5 presents a too low glass transition temperature and is therefore not suitable for the intended use in mobile electronic applications. Also, it has been noted that resins CE6 and CE8, although presenting a glass transition temperature in an acceptable range, fail to maintain their glass transition temperature in an acceptable range after exposure to water (i.e. after equilibrium moisture uptake was reached, see above described procedure for such measurement). In addition, comparative resin CE8 also features an extremely high moisture uptake (6.3 %).

The mechanical properties of the compounds prepared as above described and summarized in Table 3 (compounds A-F) using resins E4, E6, E7 and E10 are presented in Table 5.

Table 5 : Mechanical properties of the compounds with glass fibers

|  | Units | A | B | C | D | E | F | *G* | *H* |
|---|---|---|---|---|---|---|---|---|---|
| **Mechanical properties** |  |  |  |  |  |  |  |  |  |
| Tensile Strength | MPa | 248 | 230 | 237 | 249 | 243 | 260 | *245* | *187* |
| Tensile Modulus | GPa | 16.4 | 16.2 | 16.5 | 16.4 | 17.3 | 17 | *16.8* | *13.6* |
| Strain at break | % | 2.0 | 2.0 | 2.1 | 2.7 | 2.0 | 2.3 | *2.2* | *2.21* |
| Unnotched Izod | kJ/m$^2$ | 69.4 | 71 | 75.2 | 82.3 | 64 | 65 | *71.3* | *68.9* |
| Notched Izod | kJ/m$^2$ | 16.7 | 14.3 | 15.8 | 14 | 13.7 | 12 | *13* | *15* |

Comparative compound G comprising resin comparative resin CE8 was also prepared and tested for comparative purposes. The PA 6T/6I resin CE8 corresponds to a commercial amorphous polyamide product, DUPONT™ SELAR® polyamide. Another commercial polyamide, GRILAMID TR®VX-50X9, a 85/15 mixture of a first amorphous polyamide GRILAMID TR®90 (made from the polycondensation of dodecanoic acid and MACM) with an aliphatic polyamide (PA 12) compounded with 50 % glass fibers produced by EMS, commonly used in mobile electronic applications such as mobile phone housings and components, was also tested and reported in Table 5 as compound H.

While compounds G and H feature at first sight an acceptable set of mechanical properties, compounds A to F present far better properties in terms of tensile strength and tensile modulus.

Compounds C-D and E-F demonstrate that the selection of a particular type of glass fiber (with a non-circular cross section vs. a circular cross section) allows to fine tune the properties of the compounds in view of their end use since the various components of mobile electronic devices have different set of properties requirements.

The observations related to the warpage of molded parts and the flow length measurement of compounds A-H are reported in Table 6.

Table 6 : Warpage and flow length of the compounds

|  | Units | A | B | C | D | E | F | *G* | *H* |
|---|---|---|---|---|---|---|---|---|---|
| Warpage | - | ++ | + | ++ | ++ | ++ | + | + | ++ |
| Flow length at 1500 psi | in |  |  | 4.375 | 4.000 | 4.750 | 3.100 | / | *4.250* |

The warpage was inspected visually on 2x2 inches square plaques molded by injection molding with compounds A-H. The results are reported in Table 6 where "+" corresponds to samples where almost no warpage was observed and "++" corresponds to samples where no warpage was observed.

The flow length was measured using the so-called spiral flow test using a mold with a long spiral flow channel emanating from the center. Notches are typically etched along the flow path to help identify the length the polymer has flowed within the mold. The mold was filled using constant pressure and the behavior of the polymer was evaluated based on flow length. Flow length data of compounds C, D, E, F, G and H are presented in Table 6 at 1500 psi, at a mold temperature 113°C and at a melt temperature of 326°C for compounds C, D, E and F and at a mold temperature of 85°C and at a melt temperature of 285°C for compound H. Compounds D, F and H present acceptable flow lengths, while compounds C and E have a higher flow length and are therefore somewhat easier to process.

Compounds A to F are, thanks to their glass transition temperatures, low moisture uptake, good processability, low flash, low warpage, high impact resistance, excellent mechanical properties, good paint adhesion and also excellent colorability, the candidates of choice for the manufacture of parts of mobile electronic devices.

## Claims

1.  A mobile electronic device comprising at least one part comprising a polymer composition (C) comprising at least one amorphous polyamide (A) having recurring units derived from the polycondensation of a mixture of monomers comprising :

    - at least one aromatic dicarboxylic acid;
    - at least one cycloaliphatic diamine comprising from 6 to 12 carbon atoms, and
    - at least one third monomer comprising from 10 to 16 carbon atoms selected from the group consisting of an acyclic aliphatic diamine, an acyclic aliphatic dicarboxylic acid and an acyclic aliphatic aminoacid;
    wherein the aromatic dicarboxylic acid is present in the mixture of monomers in an amount of from 70 to 100 mol %, based on the total amount of all dicarboxylic acids present.

2.  The mobile electronic device according to claim 1, wherein said aromatic dicarboxylic acid is selected from the group consisting of terephthalic acid (TA) and isophthalic acid (IA).

3.  The mobile electronic device according to anyone of the preceding claims, wherein said cycloaliphatic diamine comprises from 8 to 10 carbon atoms.

4.  The mobile electronic device according to claim 3, wherein said cycloaliphatic diamine is 1,3-bis(aminomethyl)cyclohexane (BAC) or isophoronediamine (IPDA).

5.  The mobile electronic device according to anyone of the preceding claims, wherein said cycloaliphatic diamine comprising from 6 to 12 carbon atoms is present in the mixture of monomers in an amount of at least 30 mol % and at most 80 mol %, based on the total amount of all diamines present.

6.  The mobile electronic device according to anyone of the preceding claims, wherein said third monomer comprising from 10 to 16 carbon atoms is an acyclic aliphatic diamine.

7.  The mobile electronic device according to claim 6, wherein said acyclic aliphatic diamine is 1,10-diaminodecane.

8.  The mobile electronic device according to claim 1, wherein said third monomer is sebacic acid.

9.  The mobile electronic device according to anyone of the preceding claims, wherein said polymer composition (C) further comprises at least one reinforcing filler.

10. The mobile electronic device according to claim 9, wherein said reinforcing filler is a glass fiber having a circular cross-section or a non-circular cross-section.

11. The mobile electronic device according to claim 10, wherein said glass fiber having a circular cross-section has a diameter of 5 to 10 $\mu$m.

12. The mobile electronic device according to anyone of the preceding claims, wherein said polymer composition (C) further comprises at least one pigment, different from the reinforcing filler, selected from the group consisting of carbon black, zinc sulfide and titanium dioxide.

13. The mobile electronic device according to anyone of the preceding claims, wherein said part is a mobile phone housing.

14. Method for the manufacture of the part of the mobile electronic device according to anyone of the preceding claims, comprising a step of injection molding and solidification of the polymer composition (C).

15. Method for the manufacture of the mobile electronic device according to anyone of claims 1-13, said method including the steps of:

- providing as components at least a circuit board, a screen and a battery;
- providing at least one part comprising the polymer composition (C);
- assembling at least one of said components with said part or mounting at least one of said components on said part.

Europäisches
Patentamt

European
Patent Office

Office européen
des brevets

**EUROPEAN SEARCH REPORT**

Application Number

EP 13 15 5491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2012/049252 A2 (SOLVAY SPECIALTY POLYMERS USA LLC [US]; DESIO GLENN P [US]; CUEVAS AMY) 19 April 2012 (2012-04-19) * claims 1, 5-8, 12-15 * ----- | 1-15 | INV. C08G69/26 C08L77/06 C08K3/00 |
| Y | US 3 875 120 A (BRINKMANN LUDWIG ET AL) 1 April 1975 (1975-04-01) * example 4 * ----- | 1-15 | |

TECHNICAL FIELDS SEARCHED (IPC)

C08G
C08L
C08K

The present search report has been drawn up for all claims

| Place of search | Date of completion of the search | Examiner |
|---|---|---|
| Munich | 24 May 2013 | Glanddier, Anne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 15 5491

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2013

| Patent document cited in search report | | Publication date | Patent family member(s) | | Publication date |
|---|---|---|---|---|---|
| WO 2012049252 | A2 | 19-04-2012 | NONE | | |
| US 3875120 | A | 01-04-1975 | AT | 336279 B | 25-04-1977 |
| | | | AU | 5612773 A | 28-11-1974 |
| | | | BE | 800126 A1 | 28-11-1973 |
| | | | CA | 992247 A1 | 29-06-1976 |
| | | | DE | 2225938 A1 | 13-12-1973 |
| | | | ES | 414985 A1 | 16-02-1976 |
| | | | FR | 2189448 A1 | 25-01-1974 |
| | | | GB | 1433144 A | 22-04-1976 |
| | | | IT | 987933 B | 20-03-1975 |
| | | | JP | S572730 B2 | 18-01-1982 |
| | | | JP | S4955796 A | 30-05-1974 |
| | | | NL | 7307138 A | 29-11-1973 |
| | | | US | 3875120 A | 01-04-1975 |
| | | | ZA | 7303484 A | 29-05-1974 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1972659 A1
- US 20090062452 A
- US 20120083558 A

**Non-patent literature cited in the description**

- **JOHN MURPHY.** Additives for Plastics Handbook. 43-48